# EUROPEAN PATENT APPLICATION

(11) **EP 2 157 778 A1**
(43) Date of publication of application: **24.02.2010**
(21) Application number: 08715374.8
(22) Date of filing: 31.03.2008
(51) Int. Cl.: H04N 1/00

(54) **FAXING METHOD, SYSTEM AND FAXING COMPUTER**

(30) Priority: 11.04.2007 CN 200710073875
(71) Applicant: Huawei Technologies Co., Ltd., Longgang District, Shenzhen Guangdong 518129 (CN)
(72) Inventor: DUBBAKA, Sridhar, Kodihalli, Bangalore (IN)
(74) Representative: Pfenning, Meinig & Partner GbR
(86) International application number: PCT/CN2008/070641
(87) International publication number: WO 2008/125046

(57) **Abstract**

A faxing method includes: acquiring an original image which needs to be faxed; converting the original image into a set of concolorous line segments; encoding the set of concolorous line segments to obtain the concolorous line segment code of the image, and sending the concolorous line segment code to the receiving end in the form of faxing. The present invention provides a faxing system and a faxing computer. In accordance with the invention, the encoding with the use of pixel could be prevented from occupying relatively large memory space of the faxing computer and much more CPU, the efficiency of faxing could be improved, therefore, the transmission could be steady even when the faxing system is performing one-to-many faxing, the stability of the faxing system could be improved, and the shutdown of the faxing computer could be reduced.

## Description

This application claims the priority of CN Application No. 200710073875.4 filed on April 11, 2007, titled "FAX METHOD, FAX SYSTEM AND FAX COMPUTER", which is incorporated herein by reference in its entirety.

### Field of the Invention

The present invention relates to computer fax technologies, and in particular, to a fax method, a fax system and a fax computer employing the computer fax technologies.

### Background of the Invention

With the development of computer technologies, an important development direction of modem facsimile apparatus is computer fax technology. For computer fax, a fax file is usually converted into a fax signal by a computer and then sent to a receiving-end facsimile apparatus via a wired network or wireless network. The receiving-end facsimile apparatus restores the signal received to an image and prints the image onto a piece of paper.

At present, 1D and 2D encoding formats in T.4 and T.6 encoding recommended by International Telecommunication Union (ITU) are employed in the industry. In this fax method, the encoding method is as follows: after an image is divided into a combination of alternative black and white small line segments, each black and white small line segment is partitioned into pixel points and a pixel point set is obtained, and then the above pixel point set is encoded.

During the implementation of the invention, the inventor finds that the above prior art at least has the following disadvantages: if an image to be faxed includes large amount of pixel points, for example, when the fax image is an image with 1728×2200 pixels and includes about 3.6M pixel points, and the number of images to be faxed is large, the memory space used for storing these pixel points is very large. Thus, when these pixel points are encoded, the Central Processing Unit (CPU) of the facsimile apparatus is rather heavily occupied. Because the resource occupation of the memory and the CPU is very large especially in a one-to-many fax system, the stability of the transmitting facsimile apparatus is poor, and the system often breaks down.

### Summary of the Invention

The embodiments of the invention provide a fax method, a fax system and a fax computer using computer fax technologies, thereby the CPU and memory resources of the fax computer may be saved, and the performance may be more stable.

An embodiment of the invention provides a method for sending a fax, including:

obtaining an original image of the fax to be sent;

converting the original image into homochromatic line segments; and

encoding the homochromatic line segments into a homochromatic line segment encoded image, and sending the homochromatic line segment encoded image to a receiving end in form of fax.

An embodiment of the invention provides a method for receiving a fax, including:

receiving a homochromatic line segment encoded image obtained by encoding homochromatic line segments; and

decoding the homochromatic line segment encoded image and obtaining a fax image.

An embodiment of the invention provides a fax system, which includes a fax sending computer and a fax receiving computer, wherein:

the fax sending computer is adapted to convert an original image into homochromatic line segments, encode the homochromatic line segments into a homochromatic line segment image, and send the homochromatic line segment image to the fax receiving computer;

the fax receiving computer is adapted to receive the homochromatic line segment encoded image from the fax sending computer, decode the homochromatic line segment encoded image and obtain a fax image.

An embodiment of the invention further provides a fax computer, which includes:

an original image receiving unit, adapted to receive an original image of a fax to be sent;

an original image decoding unit, adapted to convert the original image into a homochromatic line segment set;

a line segment encoding unit, adapted to perform line segment encoding on the homochromatic line segment set and obtain a homochromatic line segment encoded image; and

a fax sending unit, adapted to send the homochromatic line segment encoded image in form of fax.

An embodiment of the invention provides another fax computer, which includes:

a fax receiving unit, adapted to receive a homochromatic line segment encoded image obtained by encoding homochromatic line segments; and

a line segment decoding unit, adapted to decode the homochromatic line segment encoded image and obtain a fax image.

It can be seen from the above solutions that in the embodiments of the invention, by directly encoding the homochromatic line segment, it may be avoided that large memory space and much CPU of the fax computer are occupied when pixel point is used for encoding, so that fax efficiency may be improved, the fax system can transfer steadily even during a one-to-many fax, the stability of the fax system may be improved, and the situation of fax computer breakdown may be reduced. Taking the case of testing the transmission with a fax computer having a CPU with a primary frequency of 3G and a memory of 1G as an example, in the embodiments of the invention, when a 1728x2200 original image is processed and the fax is sent via point pixels, the memory occupation is about 11MB; however, when the fax is sent using the technical solution according to the embodiments of the invention, the memory occupation is only about 0.4MB. For the computation time of a 1728×2200 original image, about 19000ms are required when the fax is sent via point pixels, but only 28ms are required in the embodiments of the invention.

### Brief Description of the Drawings

Figure 1 is a flow chart of the fax method according to an embodiment of the invention;

Figure 2 is a schematic diagram showing the process for implementing the line segment encoding according to an embodiment of the invention;

Figure 3 is a schematic diagram showing the process for implementing line segment decoding according to an embodiment of the invention; and

Figure 4 is a block diagram of the fax system according to an embodiment of the invention.

### Detailed Description of the Embodiments

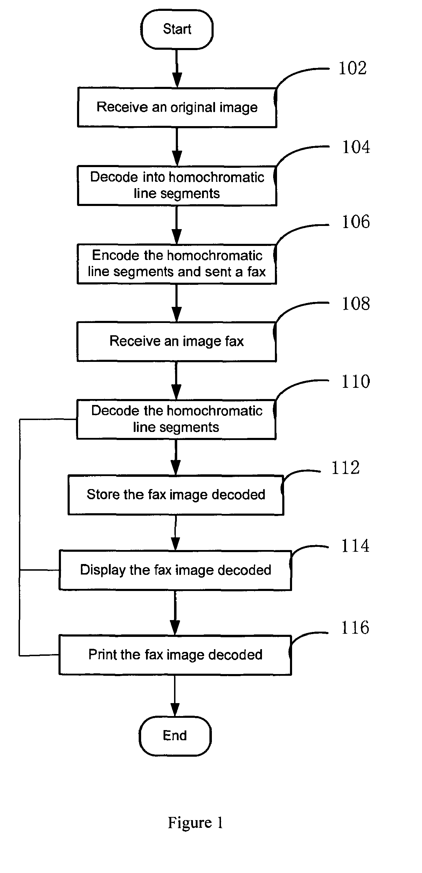

Please refer to Figure 1, which shows a fax method including: receiving an original image of a fax to be sent; decoding the original image into homochromatic line segments; encoding the homochromatic line segments directly, and then sending the encoded image of the homochromatic line segments in form of fax. Specifically, the fax method includes the following steps:

Step 102: A fax sending computer receives the original image of a fax to be sent. In this embodiment, the original image is a static image that is input in the form of Tagged Image File Format (TIFF) file or paper file, etc. If is the image is a TIFF file, the image may be encoded with the 1D or 2D encoding format in T.4 or T.6 encoding.

Step 104: The fax sending computer decodes the original image into homochromatic line segments. In this embodiment, if the original image is input in the T.4 standard compressed file format of TIFF file, the decoding may be implemented according to the standard compressed file format, and the original image is converted into black and white homochromatic line segments. If the input is implemented in form of paper file, the image in form of paper file is read and described in form of homochromatic line segments. For easy description, in this embodiment, the illustration is made by taking the case that the input is implemented in form of a black and white paper file as an example. The input of a color file is similar, except that the sorts of colors of the color file need to be recorded.

Step 106: The fax sending computer encodes the homochromatic line segments into a homochromatic line segment encoded image and sends the encoded image in form of fax. Taking the 1D and 2D encoding formats in T.4 and T.6 encoding recommended by ITU-T as an example, the fax computer employs 1D encoding and describes an image using the combination of a series of small line segments, where the color of each small line segment is the same. Each image consists of multiple lines of data, and each line of data consists of a series of alternative black and white line segments. In the 1D encoding, the length of each black line segment or white line segment is replaced by a specific bit code stream, and the line-end symbol is also replaced by a specific bit code stream. For example, 00110101 represents that the length of the white line segment is 0, 0000110111 represents that the length of the black line segment is 0, and the page-end symbol is 000000000001, etc. Thus, the image is finally be represented by a collection of these specific bit code streams. The 2D encoding is an extension of the 1D encoding, where the first line is encoded according to the mode of the 1D encoding, and for the n lines thereafter, a location offset of the endpoint of a certain line segment in the current line relative to the corresponding endpoint of the previous line is given based on the previous line. After the encoding in the 2D mode is decoded, there are still line segments.

In this embodiment, the homochromatic line segment is no longer partitioned into pixel points. Instead, the original image is identified directly with homochromatic line segments, and the homochromatic line segment is encoded directly. First of all, the source image of the 1D or 2D format needs to be decoded, and a series of alternative black and white line segments are obtained as the decoding result. However, after the source image is decoded into alternative black and white line segments, these line segments are not converted to a point set, nor is image scaling or image conversion performed on the basis of the point set. Instead, the alternative black and white line segments decoded and obtained currently are directly converted to obtain a set of the alternative black and white line segments of the target image.

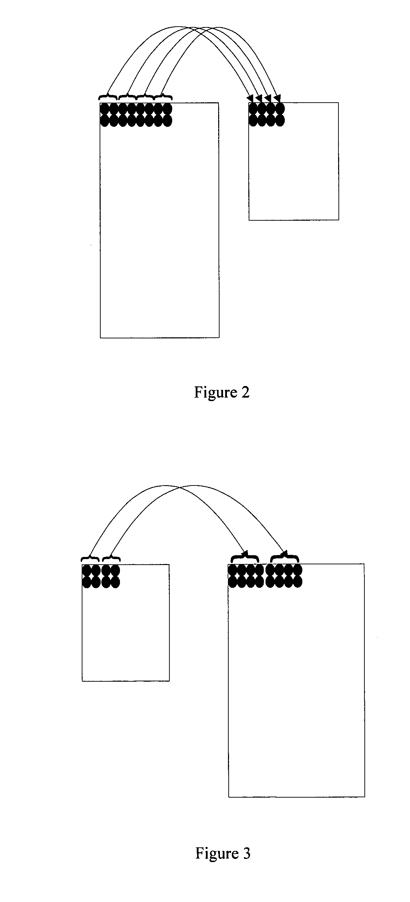

Please refer to Figure 2. In this embodiment, the algorithm for image scaling and conversion finds a pixel set of the source image used for computing a certain pixel color of the target image according to the scaling characteristic. Similarly, a similar method may be used to find a target pixel set relevant to a certain source pixel color. For example, for a bilinear image processing algorithm, the method shown in the drawing may be used to find the correspondence between the source pixel and the target pixel. If the original image zooms out to half size, pixel 1 and pixel 2 of the original image correspond to pixel 1 of the target image; if the image zooms in to twice in size, pixel 1 and pixel 2 of the source image correspond to pixels 1 to 4 of the target image. Thus, it can be seen that such a correspondence between the source pixel and the target pixel changes as the scaling factor changes. For a monochrome fax image, a series of alternative black and white small line segments are obtained as the decoding result. The length of each small line segment of the target image corresponding to the line segments of the original image is computed, so that a line segment set of the target image is obtained, and thus a homochromatic line segment encoded image may be obtained. For the image conversion, the length value of the current line segment code is read, this length value is set as the cycle index of line segment encoding, and the line segments are encoded in turn according to the cycle index.

Step 108: A fax receiving computer receives a fax of the above homochromatic line segment encoded image.

Step 110: The fax receiving computer decodes the homochromatic line segment encoded image and obtains a fax image. Please refer to Figure 3, in this embodiment, the decoding is carried out according to the reverse process of the encoding process in Step 106. If the original image zooms out to half size, pixel 1 and pixel 2 of the original image correspond to pixel 1 of the target image; if the image zooms in to twice in size, pixel 1 and pixel 2 of the source image correspond to pixels 1 to 4 of the target image. Thus, it can be seen that such a correspondence between the source pixel and the target pixel changes as the scaling factor changes. For a monochrome fax image, a series of alternative black and white small line segments are obtained as the decoding result. The length of each small line segment of the target image corresponding to the line segments of the original image is computed, so that a line segment set of the target image is obtained, and thus a homochromatic line segment fax image may be obtained.

Step 112: The fax receiving computer stores the fax image decoded. In this embodiment, a fax computer with storage function is taken as an example, so current step of storing the original image file is included. For those skilled in the art, the fax computer may have no storage function; instead, the fax computer may send a fax directly after processing.

Step 114: The fax receiving computer displays the fax image decoded. In this embodiment, a fax computer with display function is taken as an example, so current step of displaying the original image is included. For those skilled in the art, the fax computer may also have no display function.

Step 116: The fax receiving computer prints the fax image decoded. In this embodiment, a fax computer with print function is taken as an example, so current step of printing the fax image received is included. For those skilled in the art, the fax computer may also have no print function.

It may be seen from the above solutions that in the embodiment of the invention, by directly encoding the homochromatic line segment, it may be avoided that large memory space and much CPU of the fax computer are occupied when the pixel point is used for encoding, so that the fax efficiency may be improved, the fax system may perform transfer steadily even during the process of the one-to-many fax, the stability of the fax system may be improved, and the situation of fax computer breakdown may be reduced. Taking the case of testing the transmission with a fax computer having a CPU with a primary frequency of 3G and a memory of 1G as an example, in the embodiments of the invention, when a 1728×2200 original image is processed and the fax is sent via point pixels, the memory occupation is about 11MB; however, when the fax is sent using the technical solution according to the embodiment of the invention, the memory occupation is only about 0.4MB. For the computation time of a 1728×2200 original image, about 19000ms are required when the fax is sent via point pixels, whereas only 28ms are required in the embodiments of the invention. By displaying the fax image received, the user may be able to browse the image, without the necessity of printing the fax. By storing the fax image received, the user may not print the fax image for the moment and may store the above fax image for a long time in the case that there is no print paper, so it is convenient for the user.

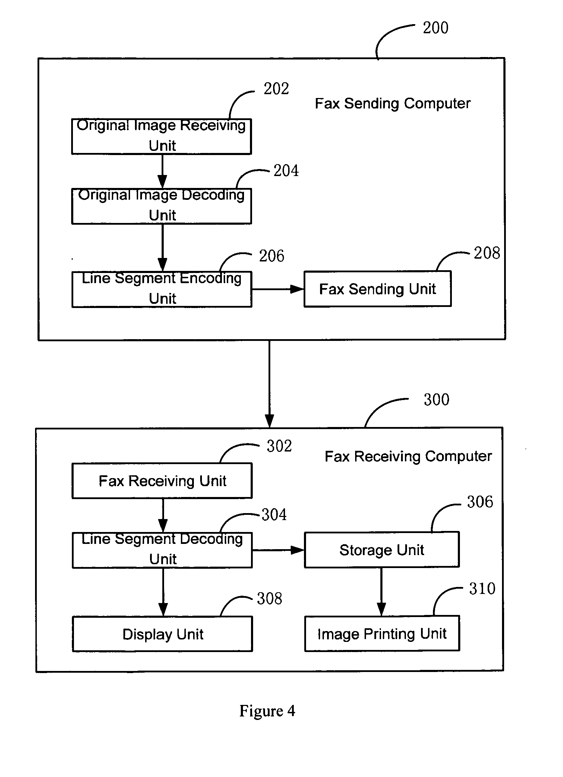

Please refer to Figure 4, it provides a fax system, which includes a fax sending computer 200 and a fax receiving computer 300. The fax sending computer 200 is adapted to send fax, and the fax receiving computer 300 is adapted to receive fax. After performing homochromatic line segment encoding on the original image, the fax sending computer 200 sends the homochromatic line segment image to the fax receiving computer 300.

The fax sending computer 200 further includes: an original image receiving unit 202, an original image decoding unit 204, a line segment encoding unit 206 and a fax sending unit 208.

The original image receiving unit 202 is adapted to receive the original image of a fax to be sent.

The original image decoding unit 204 is adapted to decode the original image to homochromatic line segments. In this embodiment, if the original image is input in the T.4 standard compressed file format of TIFF file, the decoding may be implemented according to the standard compressed file format, and the original image only needs to be decoded to black and white homochromatic line segments. If the input is implemented in the paper file form, the image in the paper file form is read and described in the form of homochromatic line segments. For easy description, in this embodiment, illustration is made by taking the case that the input is implemented in black and white paper file form as an example; the input of a color file is similar, except that the sorts of colors of the color file need to be recorded.

The line segment encoding unit 206 is adapted to encode the homochromatic line segments into a homochromatic line segment encoded image. Taking the 1D and 2D encoding formats in T.4 and T.6 encoding recommended by ITU-T as an example, the fax computer employs 1D encoding and describes an image using the combination of a series of small line segments, where the color of each small line segment is the same. Each image consists of multiple lines of data, and each line of data consists of a series of alternative black and white line segments. In the 1D encoding, the length of each black line segment or white line segment is replaced by a specific bit code stream, and the line-end symbol is also replaced by a specific bit code stream. For example, 00110101 represents that the length of the white line segment is 0, 0000110111 represents that the length of the black line segment is 0, and the page-end symbol is 000000000001, etc. Thus, the image is finally be represented by a collection of these specific bit code streams. The 2D encoding is an extension of the 1D encoding, where the first line is encoded according to the mode of the 1D encoding, and for the n lines thereafter, a location offset of the endpoint of a certain line segment in the current line relative to the corresponding endpoint of the previous line is given based on the previous line. After the encoding in the 2D mode is decoded, they are still line segments.

In this embodiment, the homochromatic line segment is no longer partitioned into pixel points. Instead, the original image is identified with homochromatic line segments, and the homochromatic line segment is encoded directly. First of all, the source image of the 1D or 2D format needs to be decoded, and a series of alternative black and white line segments are obtained as the decoding result. However, after the source image is decoded to alternative black and white line segments, these line segments are not converted to a point set, nor is image scaling or image conversion performed on the basis of the point set. Instead, the alternative black and white line segments decoded and obtained currently are directly converted to obtain a set of the alternative black and white line segments of the target image.

Please refer to Figure 2. In this embodiment, the algorithm for image scaling and conversion finds a pixel set of the source image used for computing a certain pixel color of the target image according to the scaling characteristic. Similarly, a similar method may be used to find a target pixel set relevant to a certain source pixel color. For example, for a bilinear image processing algorithm, the method shown in the drawing may be used to find the correspondence between the source pixel and the target pixel. If the original image zooms out to half size, pixel 1 and pixel 2 of the original image correspond to pixel 1 of the target image; if the image zooms in to twice in size, pixel 1 and pixel 2 of the source image correspond to pixels 1 to 4 of the target image. Thus, it can be seen that such a correspondence between the source pixel and the target pixel changes as the scaling factor changes. For a monochrome fax image, a series of alternative black and white small line segments are obtained as the decoding result. The length of each small line segment of the target image corresponding to the line segments of the original image is computed, so that a line segment set of the target image is obtained, and thus a homochromatic line segment encoded image may be obtained. For the image conversion, the length value of the current line segment code may be read, this length value is set as the cycle index of line segment encoding, and the line segments are encoded in turn according to the cycle index.

The fax sending unit 208 is adapted to send the homochromatic line segment encoded image in form of fax.

The fax receiving computer 300 includes: a fax receiving unit 302, a line segment decoding unit 304, a storage unit 306, a display unit 308 and an image printing unit 310.

The fax receiving unit 302 is adapted to receive the fax of the above homochromatic line segment encoded image.

The line segment decoding unit 304 is adapted to decode the homochromatic line segment encoded image and obtain a fax image. Please refer to Figure 3, in this embodiment, the decoding is carried out according to the reverse process of the encoding process of the line segment encoding unit 206. If the original image zooms out to half size, pixel 1 and pixel 2 of the original image correspond to pixel 1 of the target image; if the image zooms in to twice in size, pixel 1 and pixel 2 of the source image correspond to pixels 1 to 4 of the target image. Thus, it can be seen that such a correspondence between the source pixel and the target pixel changes as the scaling factor changes. For a monochrome fax image, a series of alternative black and white small line segments are obtained as the decoding result. The length of each small line segment of the target image corresponding to the line segments of the original image is computed, so that a line segment set of the target image is obtained, and thus a homochromatic line segment fax image is obtained.

The storage unit 306 is adapted to store the fax image decoded.

The display unit 308 is adapted to display the fax image decoded.

The image printing unit 310 is adapted to print the fax image decoded.

It can be seen from the above solutions that in the embodiments of the invention, by directly encoding the homochromatic line segment via the original image encoding unit 204, it is avoided that large memory space of the fax computer and much CPU are occupied when the pixel point is used for encoding, so that the fax efficiency may be improved, the fax system may transfer steadily during the process of one-to-many fax, the stability of the fax system may be improved, and the situation of fax computer breakdown may be reduced. Taking the case of testing the transmission with a fax computer having a CPU with a primary frequency of 3G and a memory of 1G as an example, in the embodiments of the invention, when a 1728×2200 original image is processed and the fax is sent via point pixels, the memory occupation is about 11MB. However, when the fax is sent using the technical solution according to the embodiments of the invention, the memory occupation is only about 0.4MB. For the computation time of a 1728×2200 original image, about 19000ms are required when the fax is sent via point pixels, but only 28ms are required in the embodiments of the invention. By displaying the fax image received via the display unit 308, the user may be able to browse the image, without the necessity to print the fax. By storing the fax image received via the storage unit 306, the user may not print the fax image for the moment and may store the above fax image for a long time in the case that there is no print paper available, so it is convenient for the user.

Only the preferred embodiments of the present invention are illustrated above. These embodiments are not intended to limit the scope of protection of the invention. Any modifications, replacements or improvements etc. in the principle of the present invention are included in the scope of protection of the invention.

## Claims

1. A method for sending a fax, **characterized by** comprising:
obtaining an original image of the fax to be sent;
converting the original image into homochromatic line segments; and
encoding the homochromatic line segments into a homochromatic line segment encoded image, and sending the homochromatic line segment encoded image to a receiving end in form of fax.

2. The method for sending the fax according to claim 1, wherein, the process of encoding the homochromatic line segment set comprises:
computing a length of the homochromatic line segments, and scaling the length of the homochromatic line segments according to a scaling factor.

3. The method for sending the fax according to claim 2, wherein, a scaling algorithm of the scaling comprises at least one of: point filtration algorithm, rectangle filtration algorithm, triangle filtration algorithm, ellipse filtration algorithm or linear conversion algorithm.

4. The method for sending the fax according to claim 2, wherein, the scaling is an equal proportion scaling.

5. A method for receiving a fax, comprising:
receiving a homochromatic line segment encoded image obtained by encoding homochromatic line segments; and
decoding the homochromatic line segment encoded image and obtaining a fax image.

6. The method for receiving the fax according to claim 5, further comprising a step of outputting the image obtained:
displaying or printing the fax image.

7. A fax system, comprising a fax sending computer and a fax receiving computer, wherein:
the fax sending computer is adapted to convert an original image into homochromatic line segments, encode the homochromatic line segments into a homochromatic line segment image, and send the homochromatic line segment image to the fax receiving computer;
the fax receiving computer is adapted to receive the homochromatic line segment encoded image from the fax sending computer, decode the homochromatic line segment encoded image and obtain a fax image.

8. A fax computer, comprising:
an original image receiving unit, adapted to receive an original image of a fax to be sent;
an original image decoding unit, adapted to convert the original image into a homochromatic line segment set;
a line segment encoding unit, adapted to perform line segment encoding on the homochromatic line segment set and obtain a homochromatic line segment encoded image; and
a fax sending unit, adapted to send the homochromatic line segment encoded image in form of fax.

9. A fax computer, **characterized by** comprising:
a fax receiving unit, adapted to receive a homochromatic line segment encoded image obtained by encoding homochromatic line segments; and
a line segment decoding unit, adapted to decode the homochromatic line segment encoded image and obtain a fax image.

10. The fax computer according to claim 9, further comprising:
an image printing unit, adapted to print the fax image.
